# EUROPÄISCHE PATENTSCHRIFT

(11) **EP 1 448 893 B1**
(45) Veröffentlichungstag und Bekanntmachung des Hinweises auf die Patenterteilung: **02.07.2008**
(21) Anmeldenummer: 02785067.6
(22) Anmeldetag: 15.11.2002
(51) Int. Cl.: F04B 49/06, F04B 27/10

(54) **HUBERMITTELUNG IN HUBKOLBENMASCHINE**
DETERMINATION OF THE PISTON STROKE IN A RECIPROCATING PISTON MACHINE
DETERMINATION DE LA COURSE DU PISTON D'UNE MACHINE A PISTON ALTERNATIF

(30) Priorität: 19.11.2001 DE 10156784
(43) Veröffentlichungstag der Anmeldung: 25.08.2004
(73) Patentinhaber: ixetic MAC GmbH, 61352 Bad Homburg (DE)
(72) Erfinder: SCHÄFER, Thilo, 55566 Daubach (DE); WEBER, Georg, 63071 Offenbach (DE)
(74) Vertreter: Duschl, Edgar Johannes
(86) Internationale Anmeldenummer: PCT/DE2002/004232
(87) Internationale Veröffentlichungsnummer: WO 2003/046382

(56) Entgegenhaltungen:
- WO-A1-00/53297
- US-A- 5 996 422
- US-B1- 6 289 680

## Beschreibung

Die Erfindung betrifft ein Verfahren zur Ermittlung des Hubes einer hubvariablen Hubkolbenmaschine, wie z. B. eines Taumelscheibenkompressors oder eines Schwenkscheibenkompressors oder eines Schwenkringkompressors, insbesondere für Klimaanlagen in Kraftfahrzeugen. Derartige Kompressoren sind bekannt, und bekannt ist auch, daß der Hub eines derartigen Kompressors z. B. durch Positionsmessung an der Taumelscheibe innerhalb des Kompressors ermittelt werden kann. Das bedeutet, daß diese Sensoren im Triebraum sehr großen Temperaturen, Drücken sowie dem umgebenden Medium standhalten müssen. Eine andere Möglichkeit ist es, elektromagnetische Sensoren für die Hubmessung zu benutzen, die außen am Gehäuse angebracht werden. Diese können aber in ihrer Funktion durch ein Gehäuse aus Eisenwerkstoffen beeinträchtigt werden. Es ist Aufgabe der Erfindung, ein Verfahren zur Ermittlung des Hubes einer hubvariablen Hubkolbenmaschine darzustellen, welches diese Nachteile nicht aufweist.

Eine weitere Möglichkeit ist in der WO/00/53927 beschrieben. Der Hub wird jetzt indirekt aus dem Volumenstrom und dem Hochdruck ermittelt.

Die Aufgabe wird gelöst durch ein Verfahren zur Ermittlung des Hubes einer hubvariablen Hubkolbenmaschine, wie z. B. eines Taumelscheibenkompressors oder eines Schwenkscheibenkompressors oder eines Schwenkringkompressors, insbesondere für Klimaanlagen in Kraftfahrzeugen, welches sich dadurch auszeichnet, daß der Hub der hubvariablen Hubkolbenmaschine indirekt aus dem Volumenstrom ermittelt wird aus einem sog. Wirkdruck PD oder einer Geschwindigkeit V des Volumenstroms und der Druckdifferenz DP = P Hochdruck - P Saugdruck im Klimakreislauf sowie der Drehzahl N des Kompressors.

Bevorzugt wird ein Verfahren, bei welchem der Wirkdruck PD aus dem Volumenstrom des Kompressors als Druckdifferenz durch eine Widerstandseinrichtung ermittelt wird. Weiterhin wird ein Verfahren bevorzugt, bei welchem die Geschwindigkeit des Kompressorvolumenstroms durch ein Hitzdraht-Anemometer ermittelt wird.

Ein erfindungsgemäßes Verfahren zeichnet sich dadurch aus, daß die Widerstandseinrichtung durch ein Venturirohr dargestellt werden kann. Weiterhin kann eine Widerstandseinrichtung durch eine Messblende dargestellt werden, welche ggf. wie das Venturirohr im Kompressor integriert sein kann. Weiterhin wird eine Widerstandseinrichtung bevorzugt, die durch eine Meßdüse dargestellt wird und ggf. im Kompressorgehäuse integriert werden kann.

Bevorzugt wird weiterhin ein Verfahren, bei dem der Hochdruck PH und / oder der Saugdruck PS mit jeweils einem Drucksensor gemessen werden können oder mit einem Differenzdrucksensor vor und nach der Widerstandseinrichtung. Außerdem wird ein Verfahren bevorzugt, bei welchem der Hochdruck PH und / oder der Saugdruck PS aus der Verdampfertemperatur oder der Umgebungstemperatur der Fahrgastzelle ermittelt werden können.

Ein erfindungsgemäßes Verfahren zeigt sich dadurch aus, daß mittels des Hubes die Leistungsaufnahme des Klimakompressors ermittelt werden kann. Weiterhin wird ein Verfahren bevorzugt, bei welchem der Hub des Kompressors als Regelgröße für ein Kompressorregelventil verwendet werden kann. Ebenfalls wird ein Verfahren bevorzugt, bei welchem mittels der Hubmessung der Klimakompressor mit einer vorgegebenen Leistung vom Motormanagement des Verbrennungsmotors betrieben werden kann.

Die Erfindung wird nun anhand der Figuren beschrieben.

Figur 1 zeigt den gesamten Kreislauf einer Klimaanlage.
Figur 2, Figur 3 und Figur 4 zeigen jeweils Varianten der Wirkdruckermittlungen.

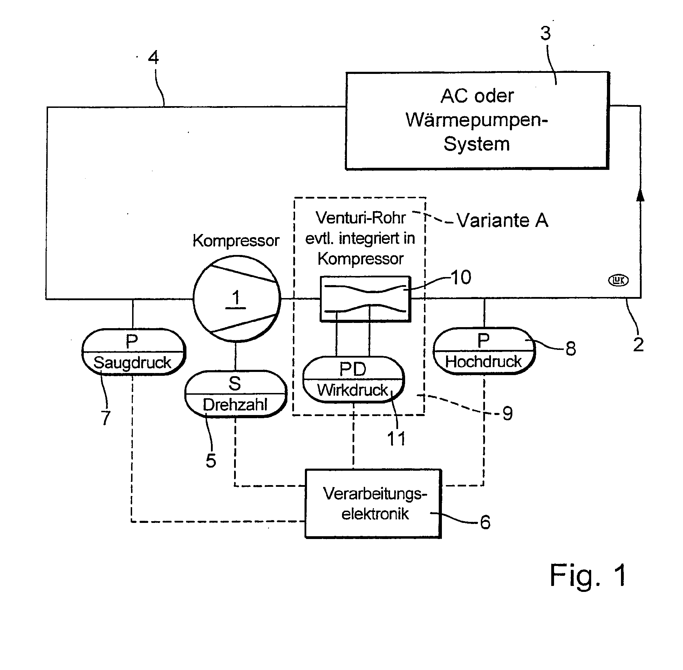

In Figur 1 ist der Kreislauf einer Klimaanlage oder eines Wärmepumpensystems dargestellt, an welchem die erfindungsgemäße Ermittlung des Kompressorhubes beschrieben werden soll. Im Kreislauf befindet sich ein hubvariabler Kompressor 1, der hier symbolhaft dargestellt ist. Der Kompressor 1 liefert unter Hochdruck ein Kühlmittel über ein Leitungssystem 2 an ein Klimaanlagensystem 3 oder an ein Wärmepumpensystem 3. Von diesem System führt eine Saugdruckleitung 4 zurück zur Ansaugseite des Kompressors 1. Die Drehzahl des Kompressors wird über einen Drehzahlsensor 5 ermittelt und einer Verarbeitungselektronik 6 zugeführt. Der Saugdruck des Kompressors wird über einen Saugdrucksensor 7 im Saugleitungsbereich 4 ermittelt. Der Hochdruck wird über einen Hochdrucksensor 8 im Hochdruckleitungsbereich 2 der Anlage ermittelt.

Der Wirkdruck selber wird durch ein System 9 ermittelt, welches in verschiedenen Varianten in den Figuren dargestellt ist. In Figur 1 wird über ein Venturirohr 10 der Wirkdruck 11 ermittelt, welcher eine den Volumenstrom des Kompressors repräsentierende Größe darstellt. Die Funktionsweise der Hubermittlung des Kompressors funktioniert also so, dass der von dem Kältemittelkompressor geförderte Volumenstrom mit Hilfe dieser Wirkdruckmessung bestimmt wird. Der geförderte Volumenstrom ist dem Hub des Kompressors proportional. Ist zusätzlich der volumetrische Wirkungsgrad des Kompressors als Funktion des Druckverhältnisses P Hochdruck - P Saugdruck bekannt, läßt sich aus dem Volumenstrom, der Drehzahl 5 und dem Druckverhältnis der Drücke 8 - 7 der Hub des Kompressors berechnen. Das Druckverhältnis wird dabei mit dem Hochdrucksensor 8 bzw. dem Saugdrucksensor 7 gemessen. Liegen keine Informationen über den Saugdruck 7 oder dem Hochdruck 8 vor, so können diese Drücke auch indirekt aus der Temperatur des Verdampfers im Kreislaufsystem oder aus der Umgebungstemperatur der Fahrgastzelle ermittelt werden.

Mit der Kompressor Hub-Information lassen sich Aussagen über die Leistungsaufnahme des Kompressors machen, die für das Motormanagement gebraucht werden. Zum anderen ist es möglich, den Kompressor mit einer vom Motormanagement vorgegebenen Leistung zu betreiben, indem man den Hub als Regelgröße für das Kompressorregelventil verwendet. Somit wird durch die Erfindung eine Möglichkeit erschaffen, genaue Aussagen über die Kompressorleistungsaufnahme zu treffen und die Forderung zu erfüllen, daß ein Kompressor mit einer vorgegebenen Leistungsaufnahme betrieben werden kann, z. B. wenn der Verbrennungsmotor dem Kompressor nur ein bestimmtes Drehmoment zur Verfügung stellen kann oder soll. Mit der Erfindung ist also ein Kompressorbetrieb mit vorgegebener Leistungsaufnahme möglich oder auch eine direkte Regelung des Kompressorhubes.

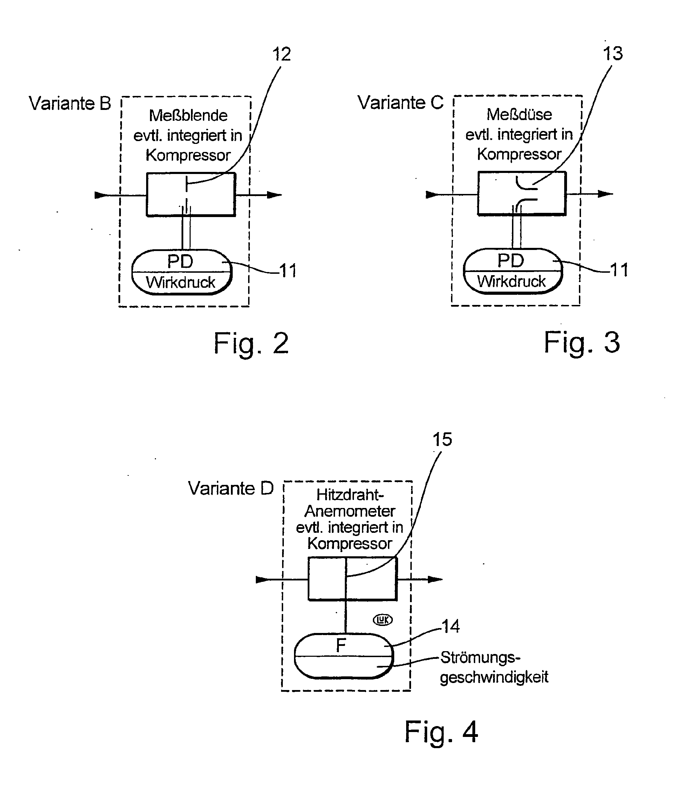

In der Figur 2 ist eine weitere Variante zur Bestimmung des Wirkdruckes 11 dargestellt. Hier wird der Wirkdruck PD durch eine Messblende ermittelt, indem der Kompressorvolumenstrom im Hochdruckbereich durch die Messblende 12 geführt wird und dabei die Druckdifferenz vor und hinter der Messblende, welche den Wirkdruck PD darstellt, ermittelt wird. Dabei kann diese Messblende sowohl außerhalb des Kompressors im Klimaanlagenkreis als auch innerhalb des Kompressors im Gehäuse oder im Zylinderkopf angeordnet sein.

Figur 3 zeigt eine weitere Variante zur Ermittlung des Wirkdruckes 11, wobei als Durchflusswiderstand für den Kompressorvolumenstrom eine Messdüse 13 verwendet wird.

Figur 4 zeigt eine physikalische Möglichkeit, die Geschwindigkeit des Volumenstroms auf der Hochdruckseite des Kompressors durch ein sogenanntes Hitzdraht-Anemometer 15 zu ermitteln. Die Meßgröße, die dieses Hitzdraht-Anemometer liefert, ist die Strömungsgeschwindigkeit 14 des vom Kompressor gelieferten Volumenstroms. Über die Geschwindigkeit kann ebenso wie über den Wirkdruck mittels der vorhin erwähnten Zusammenhänge der Kompressorhub ermittelt werden.

## Patentansprüche

1. Verfahren zur Ermittlung des Hubes einer hubvariablen Hubkolbenmaschine, **dadurch gekennzeichnet, dass** der Hub der hubvariablen Hubkolbenmaschine indirekt aus dem Volumentrom ermittelt wird aus einem Wirkdruck PD (11) oder einer Geschwindigkeit V (14) des Volumenstroms und einer Druckdifferenz DP = P Hochdruck (8) - P Saugdruck (7) sowie der Drehzahl (5) der Hubkolbenmaschine.

2. Verfahren nach Anspruch 1, **dadurch gekennzeichnet, dass** der Wirkdruck PD (11) aus dem Volumenstrom der Hubkolbenmaschine als Druckdifferenz durch eine Widerstandseinrichtung ermittelt wird.

3. Verfahren nach Anspruch 1, **dadurch gekennzeichnet, dass** die Geschwindigkeit V (14) aus dem Volumenstrom der Hubkolbenmaschine durch ein Hitzdraht-Anemometer (15) ermittelt wird.

4. Verfahren nach Anspruch 2, **dadurch gekennzeichnet, dass** die Widerstandseinrichtung ein Venturirohr (10) ist.

5. Verfahren nach Anspruch 2, **dadurch gekennzeichnet, dass** die Widerstandseinrichtung eine Blende (12) ist.

6. Verfahren nach Anspruch 2, **dadurch gekennzeichnet, dass** dass die Widerstandseinrichtung eine Düse (13) ist.

7. Verfahren nach einem der vorhergehenden Ansprüche, **dadurch gekennzeichnet, dass** der Hochdruck PH (8) und/oder der Saugdruck PS (7) mit jeweils einem Drucksensor oder mit einem Differenzdrucksensor vor und nach der Widerstandseinrichtung gemessen wird.

8. Verfahren nach einem der vorhergehenden Ansprüche, **dadurch gekennzeichnet, dass** die Hubkolbenmaschine ein Taumelscheibenkompressor oder ein Schwenkscheibenkompressor oder ein Schwenkringkompressor für Klimaanlagen in Kraftfahrzeugen ist.

9. Verfahren nach einem der vorhergehenden Ansprüche, **dadurch gekennzeichnet, dass** der Hochdruck PH (8) und/oder der Saugdruck PS (7) aus einer Verdampfertemperatur oder einer Umgebungstemperatur der Fahrgastzelle des Kraftfahrzeuges ermittelt werden.

10. Verfahren nach einem der vorhergehenden Ansprüche, **dadurch gekennzeichnet, dass** mittels des Hubes des Kompressors (1) die Leistungsaufnahme des Kompressors (1) ermittelt wird.

11. Verfahren nach einem der vorhergehenden Ansprüche, **dadurch gekennzeichnet, dass** der Hub des Kompressors (1) als Regelgröße für ein Kompressorregelventil verwendet wird.

12. Verfahren nach einem der vorhergehenden Ansprüche, **dadurch gekennzeichnet, dass** über die Ermittlung des Hubes der Kompressor (1) vom Motormanagement mit einer vorgegebenen Leistung betrieben wird.

## Claims

1. Method for determining the stroke of a variable-stroke reciprocating piston machine, **characterized in that** the stroke of the variable-stroke reciprocating piston machine is determined indirectly from the flow volume, from an active pressure PD (11) or a velocity V (14) of the flow volume and a pressure difference DP = P high pressure (8) - P suction pressure (7) as well as the speed of rotation (5) of the reciprocating piston machine.

2. Method according to Claim 1, **characterized in that** the active pressure PD (11) is determined by a resistance device from the flow volume of the reciprocating piston machine as a pressure difference.

3. Method according to Claim 1, **characterized in that** the velocity V (14) is determined from the flow volume of the reciprocating piston machine by a hot-wire anemometer (15).

4. Method according to Claim 2, **characterized in that** the resistance device is a venturi tube (10).

5. Method according to Claim 2, **characterized in that** the resistance device is an orifice plate (12).

6. Method according to Claim 2, **characterized in that** the resistance device is a nozzle (13).

7. Method according to one of the preceding claims, **characterized in that** the high pressure PH (8) and/or the suction pressure PS (7) is measured with two pressure sensors or with a differential pressure sensor before and after the resistance device.

8. Method according to one of the preceding claims, **characterized in that** the reciprocating piston machine is a wobble plate compressor or a swivel plate compressor or a swivel ring compressor for air conditioners in motor vehicles.

9. Method according to one of the preceding claims, **characterized in that** the high pressure PH (8) and/or the suction pressure PS (7) is determined from an evaporator temperature or an ambient temperature of the passenger compartment of the motor vehicle.

10. Method according to one of the preceding claims, **characterized in that** the power consumption of the compressor (1) is determined by means of the piston stroke of the compressor (1).

11. Method according to one of the preceding claims, **characterized in that** the piston stroke of the compressor (1) is used as a control variable for a compressor regulating valve.

12. Method according to one of the preceding claims, **characterized in that** through the determination of the piston stroke, the compressor (1) is operated by the motor management system at a prescribed power.

## Revendications

1. Procédé destiné à déterminer la longueur de course du piston d'un moteur à piston alternatif, **caractérisé en ce que** la longueur de course du piston du moteur à piston alternatif est déterminée indirectement à partir du flux volumétrique, à partir d'une pression active PD (11) ou d'une vitesse V (14) du flux volumétrique et d'une différence de pression DP = P haute pression (8) - P pression d'aspiration (7), ainsi qu'à partir de la vitesse de rotation (5) du moteur à piston alternatif.

2. Procédé selon la revendication 1, **caractérisé en ce que** la pression active PD (11) est déterminée sous forme de différence de pression au moyen d'un dispositif rhéostatique à partir du flux volumétrique du moteur à piston alternatif.

3. Procédé selon la revendication 1, **caractérisé en ce que** la vitesse V (14) est déterminée au moyen d'un anémomètre (15) à résistance électrique à partir du flux volumétrique du moteur à piston alternatif.

4. Procédé selon la revendication 2, **caractérisé en ce que** le dispositif rhéostatique est un tube Venturi (10).

5. Procédé selon la revendication 2, **caractérisé en ce que** le dispositif rhéostatique est un obturateur (12).

6. Procédé selon la revendication 2, **caractérisé en ce que** le dispositif rhéostatique est une buse (13).

7. Procédé selon l'une quelconque des revendications précédentes, **caractérisé en ce que** la haute pression PH (8) et/ou la pression d'aspiration PS (7) sont mesurées avec respectivement un capteur de pression ou avec un capteur de différence de pression en amont et en aval du dispositif rhéostatique.

8. Procédé selon l'une quelconque des revendications précédentes, **caractérisé en ce que** le moteur à piston alternatif est un compresseur à plateau oscillant ou un compresseur à plateau pivotant ou un compresseur à bague pivotante pour des installations de climatisation dans des véhicules automobiles.

9. Procédé selon l'une quelconque des revendications précédentes, **caractérisé en ce que** la haute pression PH (8) et/ou la pression d'aspiration PS (7) sont déterminées à partir d'une température d'évaporateur ou une température ambiante de l'habitacle du véhicule automobile.

10. Procédé selon l'une quelconque des revendications précédentes, **caractérisé en ce que** la puissance à l'arbre du compresseur (1) est déterminée au moyen de la longueur de course du compresseur (1).

11. Procédé selon l'une quelconque des revendications précédentes, **caractérisé en ce que** la longueur de course du compresseur (1) est utilisée comme grandeur de réglage pour une soupape de réglage du compresseur.

12. Procédé selon l'une quelconque des revendications précédentes, **caractérisé en ce que**, à l'appui de la détermination de la longueur de course, le compresseur (1) est exploité par le système de gestion du moteur avec une puissance définie.
